# DEMANDE DE BREVET EUROPEEN

(11) **EP 1 224 870 A1**
(43) Date de publication de la demande: **24.07.2002**
(21) Numéro de dépôt: 02290170.6
(22) Date de dépôt: 23.01.2002
(51) Int. Cl.: A23K 1/16, A23K 1/18

(54) **Utilisation de la tributyrine en alimentation animale et additif alimentaire correspondant**

(30) Priorité: 23.01.2001 FR 0100901
(71) Demandeur: Xeris, 56038 Vannes Cedex (FR)
(72) Inventeur: Raoul, Yvon, 56890 Plescop (FR)
(74) Mandataire: Vidon, Patrice

(57) **Abrégé**

L'invention concerne le domaine de l'alimentation animale et, plus précisément, l'utilisation de la tributyrine associée à au moins un émulsifiant pour la réalisation d'un aliment destiné aux animaux d'élevage.

## Description

L'invention concerne le domaine de l'alimentation animale.

Plus précisément, l'invention concerne un additif destiné à être intégré à des aliments pour animaux d'élevage, susceptible notamment de favoriser la croissance de tels animaux, et de réduire les problèmes digestifs liés à une production d'enzymes endogènes insuffisante.

Dans ce domaine, il est connu que le stress lié au sevrage de jeunes animaux d'élevage provoque une limitation de leur croissance. Le sevrage cause des changements importants de l'histologie et de la biochimie du tube digestif, ayant notamment pour effet :
- une réduction de la taille des villosités de l'intestin,
- une baisse de l'activité enzymatique, et,
- une fragilisation de la flore intestinale.

Il en résulte en particulier une plus faible capacité d'absorption des aliments, qui limite donc la croissance des animaux.

D'autre part, l'âge au sevrage dans les productions intensives s'est considérablement réduit (par exemple, l'âge du porcelet considéré sevré est passé de 35 jours à 21 jours, voire 18 jours). Cela pose le problème de l'adaptabilité du système enzymatique de l'animal à digérer un aliment à base de céréales, d'où l'utilisation actuelle d'enzymes exogènes dans les aliments (protéines, etc).

Il est cependant connu que les enzymes exogènes sont moins efficaces que les enzymes endogènes.

Pour remédier à ce problème, il a été proposé d'ajouter à l'alimentation animale du butyrate de sodium, à hauteur d'environ 2 kilogrammes par tonne d'aliments. Un tel sel se dissocie dans le tube digestif en sodium et en acide butyrique (et butyrate dans sa forme dissociée) essentiel pour le système digestif, l'acide butyrique étant un acide gras volatil naturellement produit par la flore intestinale de nombreux animaux.

Avec le butyrate de sodium, on constate donc notamment :
- une prolifération et une maturation de l'épithélium intestinal ;
- une stimulation de la sécrétion des enzymes digestives, et,
- une stabilisation du pH intestinal.

En agissant au niveau de la régulation de l'expression des gênes et de la croissance cellulaire, le butyrate de sodium a par conséquent un effet positif sur la croissance et la maturation des cellules épithéliales et entraîne un meilleur développement de la paroi intestinale (augmentation de la longueur des villosités et de la profondeur des cryptes ainsi que du nombre de cellules les constituant).

Le butyrate de sodium présente donc une efficacité intéressante, mais toutefois limitée. En effet, si l'on prend l'exemple des porcs, ce sel, particulièrement actif dans l'alimentation premier âge du porcelet, n'a plus un impact aussi net pour des porcelets plus âgés.

Ceci est dû au fait que, lorsque le porcelet vieillit, son pH stomacal devient très bas, entraînant une absorption du butyrate trop importante au niveau de l'estomac pour qu'il puisse agir sur l'intestin et le colon.

Par ailleurs, l'ensemble des études avec le butyrate de sodium a été fait avec des aliments présentés en farine.

Cependant, la majeure partie des aliments fabriqués industriellement le sont en granulés. Or, pour fabriquer un aliment granulé, on injecte de la vapeur dans la farine (100°C) avant le passage en presse. On constate alors que l'addition d'eau à l'aliment dissocie le butyrate de sodium en acide butyrique dans l'aliment. L'acide butyrique étant volatil, il se volatilise avant même d'être ingéré par l'animal.

De plus, le butyrate de sodium présente deux autres inconvénients extrêmement gênants : il implique des coûts de production importants (notamment dus à la structure des réacteurs utilisés pour le fabriquer mettant généralement en oeuvre des parois en zirconium) et il dégage une odeur très nauséabonde.

Une autre solution a été proposée pour tenter de conserver les effets du butyrate tout en améliorant son efficacité au cours de la prise d'âge et de poids des jeunes animaux.

Ainsi, dans le document EP - 0 424 055, il est proposé de fournir, dans l'alimentation animale, le butyrate sous forme d'ester (préférentiellement le butyrate d'éthyle) et non plus de sel.

Néanmoins, le butyrate d'éthyle est un ester hautement volatil, qu'il est nécessaire d'encapsuler en vue de son incorporation à l'alimentation des animaux.

Cette opération d'encapsulation tend donc à augmenter considérablement le coût de production d'un tel ester et de surcroît est aléatoire du fait de la volatilité de la molécule. De plus, le butyrate d'éthylc présente un point d'éclair aux alentours de 25°C, ce qui le rend très dangereux à manipuler.

L'invention a pour objectif de palier ces inconvénients de l'état de la technique.

Plus précisément, un objectif de l'invention est de proposer un additif susceptible d'être incorporé à l'alimentation d'animaux d'élevage notamment en vue de favoriser durablement leur croissance.

Un autre objectif de l'invention est de proposer un tel additif qui puisse fournir de l'acide butyrique à l'intestin grêle après y avoir subi une hydrolyse.

L'invention a aussi pour objectif de proposer un tel additif alimentaire qui soit plus simple et moins cher à produire que les solutions de l'art antérieur.

L'invention a également pour objectif de proposer un tel additif alimentaire qui soit adapté tant aux animaux monogastriques qu'aux animaux polygastriques.

Un autre objectif de l'invention est de proposer un tel additif alimentaire qui n'entraîne pas de nuisances sur le plan olfactif, que ce soit lors de la fabrication ou au moment de la consommation.

L'invention a aussi pour objectif de proposer un additif qui présente une bonne stabilité chimique et qui peut être associé à différents supports en vue de son incorporation dans l'alimentation d'animaux d'élevage.

Ces objectifs, ainsi que d'autres qui apparaîtront par la suite, sont atteints, selon l'invention, grâce à l'invention qui concerne l'utilisation de la tributyrine associée à au moins un émulsifiant pour la réalisation d'un aliment destiné aux animaux d'élevage.

L'utilisation d'un tel émulsifiant permet de favoriser l'absorption de la tributyrine au niveau intestinal.

La tributyrine, autrement connue sous le nom de glycéryl tributyrate, ou sous la nomenclature 1,2,3 - tributyrylglycérol, présente la structure suivante (en deux dimensions) :

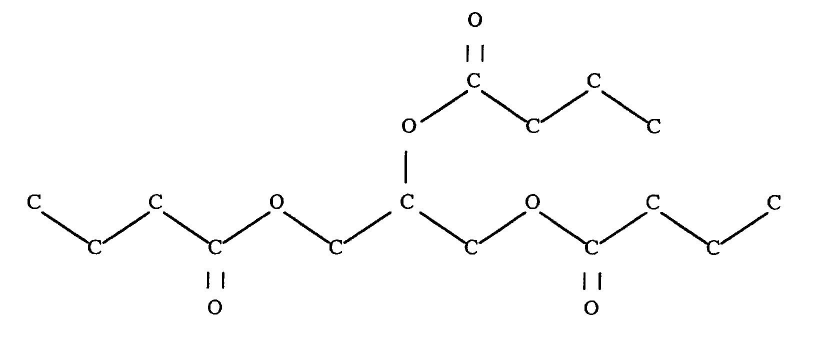

Depuis sa synthèse dans les années 1920, la tributyrine a traditionnellement été utilisée comme réactif dans l'étude de l'hydrolyse enzymatique des triglycérides.

Dans l'art antérieur, la tributyrine n'est ni citée ni suggérée en alimentation animale en combinaison avec un émulsifiant.

Contrairement au butyrate d'éthyle mentionné précédemment dans l'art antérieur, la tributyrine est un ester stable, non volatile, pouvant avantageusement être stockée à température ambiante. De plus, la tributyrine n'a aucune odeur.

Préférentiellement, la tributyrine est ajoutée à l'alimentation de l'animal à raison de 0,1 à 3 kg de tributyrine par tonne d'aliment.

Pour les porcs ,la tributyrine est ajoutée avantageusement à raison de1 à 2 kg de tributyrine par tonne d'aliment.

Pour les veaux, la tributyrine est ajoutée avantageusement à raison de 0,5 à 2 kg de tributyrine par tonne d'aliment (préférentiellement1 à 2 kg/t pour les veaux d'élevage et 2 kg/t pour les veaux de boucherie).

Pour les vaches, la tributyrine est ajoutée avantageusement à raison de 1 à 3 kg de tributyrine par tonne d'aliment.

Préférentiellement, ledit émulsifiant comprend de la lécithine.

De façon préférée entre toutes, ledit émulsifiant comprend de la lysophosphatidylcholine.

Egalement préférentiellement, le rapport pondéral émulsifiant/tributyrine est compris entre 0,5/99,5 et 5/95 et est, de façon préférée entre toutes, de 2/98.

Par ailleurs, on notera que, pour certains animaux, comm, notammant, les veaux d'élevage, la tributyrine utilisée sera préférentiellement hydrogénée. En effet, une telle hydrogénation permet à la tributyrine d'échapper à la dégradation ruminale.

L'invention couvre également tout additif alimentaire destiné à être incorporé à des aliments pour animaux d'élevage caractérisée en ce qu'il contient de la tributyrine (pouvant le cas échéant être hydrogénée) et au moins un émulsifiant ainsi que tout aliment pour animaux d'élevage caractérisé en ce qu'il contient de la tributyrine(pouvant le cas échéant être hydrogénée) et au moins un émulsifiant.

Les données expérimentales suivantes, qui sont indiquées à titre d'exemples illustratifs et non limitatifs, démontrent les effets bénéfiques de la tributyrine associée à un émulsifiant dans le cadre de l'invention.

L'additif alimentaire comprenant selon l'invention de la tributyrine a été testé sur :
- les veaux d'élevage et de boucherie ;
- les porcelets ;
- les poussins, et,
- les vaches laitières.

Pour son application aux veaux, l'aliment administré comprend, en poids, 0,5 ‰ à 2 ‰ de tributyrine, c'est-à-dire 0,5 kg à 2 kg par tonne d'aliment, et de la lyso-phosphatydylcholine dans le rapport pondéral lyso-phosphatydylcholine / tributyrin égal à 2. Le test a été conduit sur les six premiers mois de vie du veau. Après cette période, on constate chez les veaux d'élevage et de boucherie que la tributyrine associée à un émulsifiant a pour effet :
- d'accroître les sécrétions pancréatiques ;
- d'accroître la longueur des villosités de l'intestin ;
- d'accroître la capacité sécrétoire de l'intestin grêle (augmentation de la profondeur des cryptes).

On constate en outre, et plus particulièrement chez le veau d'élevage, un développement des papilles ruminales.

Après l'élevage, on remarque une augmentation de 4 à 7 kilogrammes sur le poids de la carcasse d'un veau alimenté selon l'invention par rapport à un veau nourri de façon traditionnelle.

Ce gain obtenu sur le poids de la carcasse démontre une amélioration de l'efficacité alimentaire, et non pas une variation de poids du tube digestif ou du contenu digestif.

Le tableau ci-après indique, selon une exemple de réalisation, les doses de tributyrine administrées chez des porcs en fonction de leur âge. Pendant les neuf premières semaines, l'aliment contenait 2 kg/ t de tributyrine. A compter de la dixième semaine, l'aliment ne contenait plus que 1 kg/t de tributyrine. Conformément à l'invention, l'aliment contenait également de la lyso-phosphatydylcholine dans un rapport pondéral lyso-phosphatydylcholine / tributyrine égal à 2

Conformément à l'invention, l'aliment contenait également un émulsifiant.

| Age en semaines | Poids moyen (kg) | Consommatin d'aliment (g) | Taux de tributyrine dans l'aliment (kg/t) | Ingestion tributyrine (mg/j) | Ingestion par Kg de Poids Vif (mg/kgPV) |
|---|---|---|---|---|---|
| 3 | 6 | 200 | 2 | 400 | 67 |
| 4 | 8 | 400 | 2 | 800 | 75 |
| 5 | 10 | 500 | 2 | 1000 | 100 |
| 6 | 13 | 650 | 2 | 1300 | 100 |
| 7 | 15 | 800 | 2 | 1600 | 107 |
| 8 | 20 | 1000 | 2 | 2000 | 100 |
| 9 | 25 | 1100 | 2 | 2200 | 88 |
| 10 | 30 | 1200 | 1 | 1200 | 40 |
| 13 | 45 | 4500 | 1 | 1500 | 33 |
| 16 | 60 | 2200 | 1 | 2200 | 37 |
| 19 | 75 | 2400 | 1 | 2400 | 32 |
| 22 | 90 | 2500 | 1 | 2500 | 28 |
| 25 | 105 | 2500 | 1 | 2500 | 24 |

On constate alors chez le porc que la tributyrine associé à un émulsifiant a pour effet :
- d'accroître les sécrétions pancréatiques ;
- d'accroître la capacité sécrétoire de l'intestin grêle.

Grâce à l'additif alimentaire selon l'invention, on constate une augmentation de 50 à 100 grammes de gain de poids vif par jour.

Appliquée aux poussins, on constate que l'additif alimentaire comprenant de la tributyrine a pour effet :
- d'accroître le développement de la muqueuse au jabot ;
- d'accroître les secrétions intestinales.

L'invention a aussi été testé sur la vache laitière en période de tarissement, période pendant laquelle il y a classiquement régression des papilles ruminales (phénomène hormonal) entraînant l'apparition des troubles métaboliques en début de lactation.

La tributyrine contenue dans l'aliment a pour effet, lors de la période de tarissement ainsi qu'au début de la lactation, d'accroître l'ingestion chez la vache laitière.

Pour cette application, l'aliment administré comprend, en poids, 1 ‰ à 3 ‰ de tributyrine c'est-à-dire 1 kg à 3 kg de tributyrine par tonne d'aliment.

En pratique, la dose de tributyrine pourra être adaptée au poids vif de l'animal.

D'autres modes de réalisation basés sur l'utilisation de la tributyrine associé à un émulsifiant pour la réalisation d'un aliment destiné aux animaux d'élevage sont bien sûr envisageables sans sortir du cadre de l'invention.

## Revendications

1. Utilisation de la tributyrine associée à au moins un émulsifiant pour la réalisation d'un additif alimentaire destiné aux animaux d'élevage.

2. Utilisation selon la revendication 1 **caractérisée en ce que** la tributyrine est ajoutée à l'alimentation de l'animal à raison de 0,1 à 3 kg de tributyrine par tonne d'aliment.

3. Utilisation selon la revendication 2 **caractérisée en ce que** pour les porcelets ,la tributyrine est ajoutée à raison de1 à 2 kg de tributyrine par tonne d'aliment.

4. Utilisation selon la revendication 2 **caractérisée en ce que** pour les veaux, la tributyrine est ajoutée à raison de 0,5 à 2 kg de tributyrine par tonne d'aliment.

5. Utilisation selon la revendication 2 **caractérisée en ce que** pour les vaches, la tributyrine est ajoutée à raison de 1 à 3 kg de tributyrine par tonne d'aliment

6. Utilisation selon l'une quelconque des revendications 1 à 5 **caractérisée en ce que** ledit émulsifiant comprend de la lécithine.

7. Utilisation selon la revendication 6, **caractérisée en ce que** ledit émulsifiant comprend de la lysophosphatidylcholine.

8. Utilisation selon l'une quelconque des revendications 1 à 7 **caractérisée en ce que** le rapport pondéral émulsifiant/tributyrine est compris entre 0,5/99,5 et 5/95 et est préférentiellement de 2/98.

9. Utilisation selon l'une quelconque des revendications 1 à 8 **caractérisé en ce que**, pour les veaux d'élevage, la tributyrine utilisée est hydrogénée.

10. Additif alimentaire destiné à être incorporé à des aliments pour animaux d'élevage **caractérisée en ce qu'**il contient de la tributyrine et au moins un émulsifiant.

11. Aliment pour animaux d'élevage **caractérisé en ce qu'**il contient de la tributyrine et au moins un émulsifiant.
